# EUROPEAN PATENT APPLICATION

(11) **EP 2 865 434 A1**
(43) Date of publication of application: **29.04.2015**
(21) Application number: 13189702.7
(22) Date of filing: 22.10.2013
(51) Int. Cl.: B01D 39/16, B01D 39/20

(54) **Method of filtering a fluid and a filter medium therefor**

(71) Applicant: Ahlstrom Corporation, 00100 Helsinki (FI)
(72) Inventor: Chavan, Santosh, 9350 La Mulatiere (FR); Jana, Praveen, Adams, TN 37010 (US); Viskari, Anne, 37500 Lempäälä (FI); Frillici, Andrea, 60041 Sassoferrato (AN) (IT); Costa, Giuseppe, 16146 Genova (IT)
(74) Representative: Genip Oy

(57) **Abstract**

The present invention relates to a filter medium comprising a pre-filter layer (41), an intermediate layer (42), and a fine fiber layer (43). The pre-filter layer (41) comprises fibers having a diameter and a porosity P₄₁; the intermediate layer (42) comprises fibers having a diameter and porosity P₄₂, and the fine fiber layer comprises fibers having a diameter and porosity P₄₃. The diameter of the fibers and the porosity P₄₂ of the intermediate layer (42) is larger than the diameters of fibers and the porosities P₄₁ and P₄₃ of the pre-filter layer (41) and the fine fiber layer (43).

## Description

The present invention relates to a method of filtering a fluid and a novel filter medium for filtering the fluid. Specifically, the invention relates to a filter medium that is efficient in the removal of solid particles from fluids without causing a significant pressure drop and, thus, being capable of saving energy.

There is an increasing need to filter impurities from the atmosphere, vapors and liquids, i.e. from all kinds of fluids. Specifically, air intake filtration in the transportation area as well as in the field of gas turbines requires filter media that are efficient in terms of particle removal. Moreover, indoor air quality is becoming important as respiratory illnesses, allergy and asthma symptoms occur with increasing frequency in industrialized civilization. While heating, ventilation and air conditioning (HVAC) filters can provide high particle removal capability, these filters also create significant air flow resistance. As a result, high efficiency HVAC filter systems require powerful fans to move air. Likewise, prior art filter media for air intake applications in gas turbines and transportation lead to an increased energy consumption. This goes along with tremendous CO₂ emission.

Prior art filter media use inorganic and synthetic fibers for the filtration of, e.g. air. By definition, the filters' energy consumption increases over time because their resistance to air flow increases with the amount of particles which are removed from the air.

Unfortunately, prior art media show a significant increase in their resistance to air flow as they fill up easily with dust and fine particles. When these particles are removed from the air, the energy consumption, therefore, increases.

Nowadays, there are two different filter types available on the market. The first one is a traditional filter, a so-called flow-through filter, the operation of which is based on leading the fluid to be filtered more or less at right angles through the filter medium till the medium gets clogged, or rather the pressure loss across the filter medium grows to such an extent that the filter medium has to be replaced. The variants of this type of filters range from simple planar or pleated filters to such channel type filters where the first end of the channel package is open to the incoming fluid to be filtered and the opposite second end to the filtered fluid. In such channel filters one half of the channels is open to the first end of the channel package and the other half to the second end of the channel package. Thus, to be able to advance through the filter the fluid to be filtered has to penetrate the filter media forming the channels and the flow of the fluid takes place in one direction through the filter media.

The second filter type is a so called open channel filter system, in which the channels form open flow passages through the filter package. In other words, in such a filter the fluid to be filtered is allowed to flow more or less freely along channels provided with porous walls able to separate particles from the fluid.

To ensure sufficient particle removal, prior art suggests a traditional filter medium that is made of multiple layers of different porosities. US 4,661,255 teaches the use of a multiple layer material wherein the entire operation of the filter medium is based on having the porosity of the filter medium decrease in the direction of flow through the filter. That is, the individual layers have increasingly fine or narrow pores. Such filter media, however, are not satisfactory because small and bigger particulates tend to clog the media very easily over time. As a consequence, air flow resistance increases quickly.

As a general remark it should be noted that the porosity is defined as a fraction of the volume of voids or pores in a layer over the total volume of the layer. Porosity or air permeability is oftentimes measured by using a so called porosimeter one of the manufacturers of which is Textest AG. Therefore very often the method of measuring porosity is called the Textest method. The method comprises subjecting a test sheet to an air flow with a pressure of 200 or 125 Pa.

Another prior art document US-B2-8012244 discusses the open channel filter system, i.e. a channel type filter used in the purification of exhaust gases, the filter being distinguished from flow-through filters by the fact that there is no need for the filter channels to be constructed in such a way that they are closed off on alternate sides. In open channel filters the channel walls are at least in part composed of porous material and the flow channels have diverting and/or guiding structures. Those internal fittings or microstructures in the channels cause the flow or the particles contained therein to be diverted toward the regions made from porous material. Due to the operation of diverting and/or guiding structures the particles adhere to and/or in the porous channel wall as a result of interception and/or impacting.

The open channel filter of US-B2-8012244 is manufactured by winding a plurality of stacks of filter media and fiber layer sheets together. The sheets form the diverting and/or guiding structures between the filter media. In operation some of the exhaust gas or gas stream penetrates through the filter medium and in this way enters an adjacent channel, while a further part of the exhaust gas or gas stream continues to flow along the channel, bypassing the filter medium microstructure. Configuring the filter medium with a surface layer, which represents a lower flow resistance to the gas stream than centrally disposed layers of the filter medium allows this "bypass" partial gas stream to at least partially penetrate through the surface layer and thus likewise enables some of the particulates entrained therein to be deposited on the fibers.

The prior art filter medium comprises a gas-permeable filter layer having subregions with a differing porosity in direction of the layer thickness. The gas stream is divided into partial gas streams each passing through different subregions of the filter layer.

In brief the US-B2-8012244 discusses an open channel filter, where the filtering media is formed of a fiber layer having at least three, possibly several subregions such that the porosity of the subregions or the size of the pores in the subregions decreases towards the center of the fiber layer. In other words, the smaller the particles in the fluid to be filtered are the closer to the center of the fiber layer they are able to go and be trapped. The symmetrical structure of the filter media of the US- patent is clearly a feature of an open channel filter as the fiber layer of an open channel filter has to be prepared to treat on both of its sides a flow of fluid to be filtered, and any part of the filter media has to be able to allow a partial stream of fluid to flow in any one of the two directions available.

However, as the present invention discusses a filter medium that is used for filtering fluid by allowing all the filtered fluid flow through the filter, the function of the symmetrical fiber layer cannot be utilized.

It is thus an object of the present invention is to provide an improved filter medium that avoids the risk of early clogging.

It is a further object of the present invention to provide a filter medium which avoids or at least reduces the pressure drop observed over time to thus minimize total average air flow resistance and total energy consumption for filtration.

It is another object of the present invention to avoid an early onset of an increasing pressure drop.

In a first aspect the present invention therefore relates to a method of filtering a fluid as defined in claim 1. Preferably the method comprises the steps of
- arranging a conduit for a fluid to flow,
- providing a filter medium with at least three layers, each having a porosity,
- providing the conduit with the filter medium,
- arranging the fluid to flow along the conduit in a flow direction and at a flow velocity, the flow direction being transverse to the filter medium,
- separating solid particles from the fluid by retaining such in or on the filter medium and allowing filtered fluid to flow through the filter medium, and
- manipulating the flow velocity of the fluid within the filter medium by allowing the flow velocity to decelerate in at least one layer between two other layers of the filter medium.

It has been found that the filter medium described herein is capable of removing particulates in an efficient manner without causing a significant increase in pressure drop. That is, the filter medium of the present invention exhibits a lower pressure drop at a given particle removal efficiency compared to prior art media.

In a second aspect, the present invention relates to a filter medium for filtering a fluid, the filter medium comprising at least three layers in the flow direction of the fluid,
○ at least one fibrous pre-filter layer having a porosity;
○ at least one fibrous intermediate layer having a porosity; and
○ a fine fiber layer having a porosity;
   wherein
○ the at least one fibrous intermediate layer is a decelerating layer, and
○ the porosity of the at least one decelerating layer positioned between the at least one pre-filter layer and the fine fiber layer is larger than the porosities and of the at least one pre-filter layer and the fine fiber layer, respectively.

Third and fourth aspects of the invention relate to filter elements including the filter medium and to the use of the filter medium in a method of filtering a gas or a liquid, in particular in Heating Ventilation and Air Conditioning filters and Gas Turbine intake air filtration applications.

The method and the filter medium of the present invention solves at least one of the above discussed problems and offers high filtration efficiency to improve indoor air quality, which is especially important in public buildings such as hospitals and schools, and crucial to protect people and help alleviate Sick Building Syndrome (SBS). SBS causes skin irritations, headache, and respiratory problems, and thought to be caused by indoor pollutants, microorganisms, or inadequate ventilation.

The filter medium of the present invention offers significantly better pressure drop characteristics than other commercial HEA filtration media, meaning it is much easier for the ventilation system to push air through the filter. This allows significant energy savings throughout the life time of the filter. Its sustainability credentials are compelling; cleaner indoor air quality, lower energy consumption and lower costs.

### Brief Description of Drawing

The method of filtering a fluid and a filter medium of the present invention are described more in detail below, with reference to the accompanying drawings, in which
Figure 1 shows typical pressure drop curves for a given efficiency for commercially available filter media (MG media), for commercially available spunbond filter media with a nanolayer and for the product of the invention,
Figure 2 illustrates schematically an arrangement for filtering a fluid by using the filter medium of the present invention,
Figure 3 illustrates schematically a cross section of a filter medium in accordance with a first preferred embodiment of the present invention,
Figure 4 illustrates schematically a cross section of the filter medium in accordance with a second preferred embodiment of the present invention,
Figure 5 illustrates schematically a cross section of the substrate used in the filter media in accordance with the following preferred embodiments of the present invention,
Figure 6 illustrates schematically a cross section of the filter medium in accordance with a third preferred embodiment of the present invention,
Figure 7 illustrates schematically a cross section of the filter medium in accordance with a fourth preferred embodiment of the present invention
Figure 8 illustrates schematically a cross section of the filter medium in accordance with a fifth preferred embodiment of the present invention,
Figure 9 illustrates schematically a cross section of the filter medium in accordance with a sixth preferred embodiment of the present invention,
Figure 10 illustrates schematically a cross section of the filter medium in accordance with a seventh and eighth preferred embodiments of the present invention,
Figure 11 illustrates schematically a cross section of the filter medium in accordance with a ninth preferred embodiment of the present invention,
Figure 12 illustrates schematically a cross section of the filter medium in accordance with a tenth preferred embodiment of the present invention,
Figure 13 illustrates schematically a cross section of the filter medium in accordance with a eleventh preferred embodiment of the present invention, and
Figure 14 illustrates schematically a cross section of the filter medium in accordance with a twelfth preferred embodiment of the present invention.

### Detailed Description of the Invention

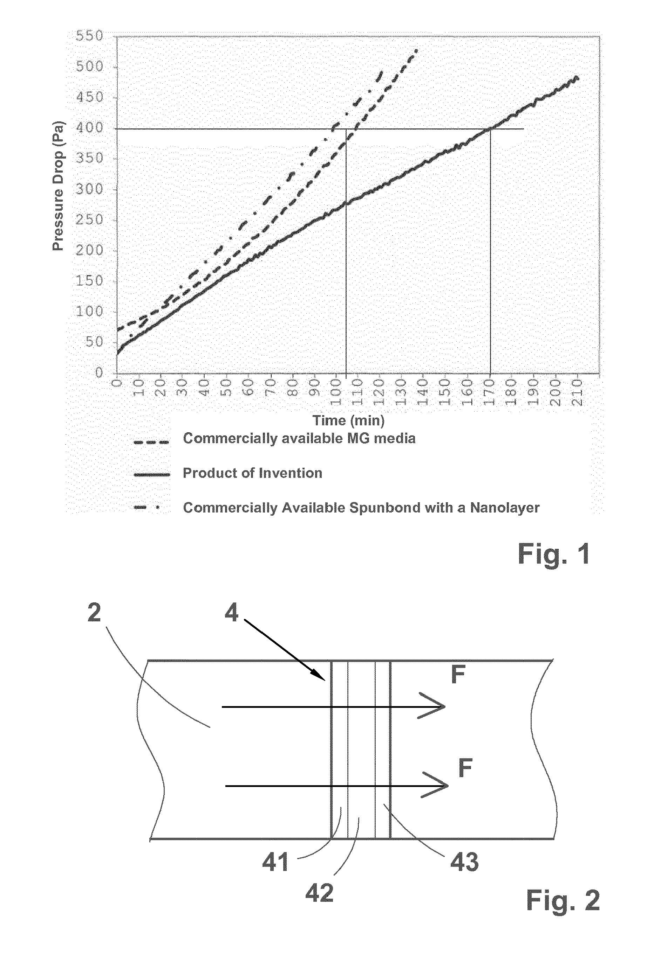

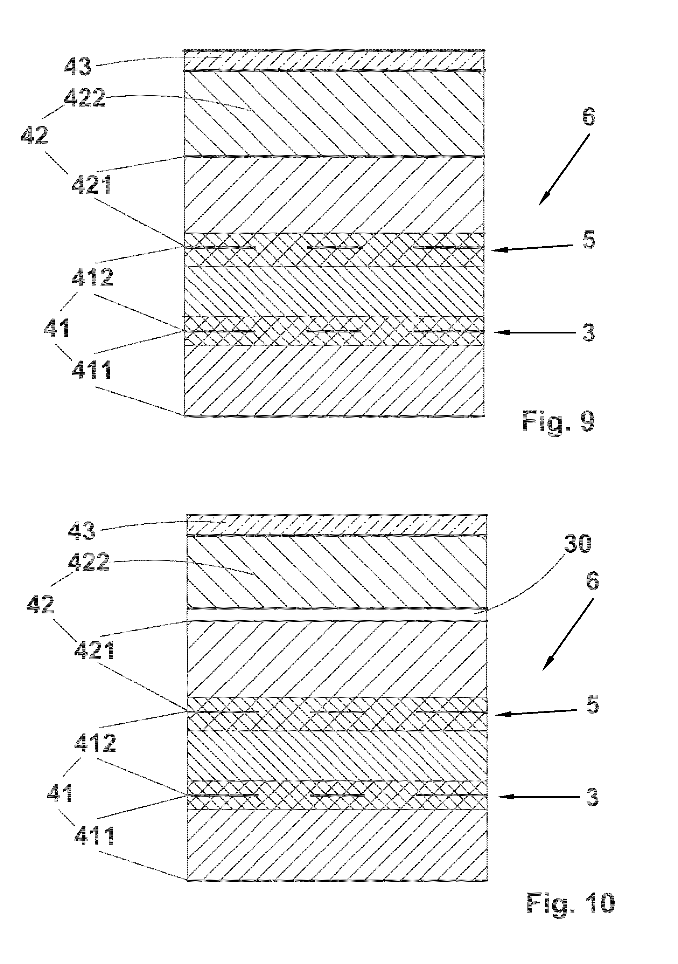

Figure 1 illustrates a comparison between two commercially available filter media and the filter medium of the present invention, i.e. the filter medium of Figure 10. The commercially available filter media are MG filter medium, i.e. a conventional two-layer filter medium made of micro glass fiber such that a pre-filter layer precedes the actual filtering layer, whereby the porosity of the filter medium decreases steadily in the direction of the fluid flow, and a filter medium formed of a PET-CoPET or PET spunbond layer provided with a nanolayer on top thereof. All three filter media were tested in similar conditions by measuring the growth in pressure drop as a function of time each filter medium was exposed to the fluid flow. All the three tested media shown in Figure 1 were selected based on same efficiency level, efficiency class F8 (according to EN779-2012). Figure 1 shows clearly how the prior art media get clogged very quickly, i.e. the pressure drop increases exponentially in relation to the time, whereas the filter medium of the present invention stays open longer. The increase in pressure drop of the filter medium of the present invention is almost linear in relation to time, or, in fact, the increase in pressure drop even gets somewhat smaller than could be expected. For instance, if a pressure drop of 400 Pa is the maximum allowable pressure drop the prior art filter media reaches the pressure drop in about 105 minutes whereas the filter medium of the invention stays operative for 170 minutes, i.e. about 62% longer than the prior art filter media.

Figure 2 illustrates schematically an arrangement for filtering a fluid by using the filter medium of the present invention. The fluid flows in the direction of arrows F in a conduit 2 where the filter medium 4 of the present invention is arranged such that the fluid when being filtered has to flow through the filter medium 4. Thus the filter medium 4 is arranged transverse to the conduit 2. Naturally, it is clear that the filter medium of the invention is not necessarily a planar filter but preferably a pleated filter whereby the available filtering area is increased. However, the operation of the filter is still such that the flow of (filtered) fluid has to penetrate the filter medium and the flow through the filter medium takes place in only one direction when the filter is performing its filtering task. Figure 2 also shows, in a simplified manner, that the filter medium is formed of three layers, i.e. an upstream pre-filter layer 41 receiving the flow of the fluid to be filtered into the filter medium, an intermediate layer 42 and a downstream fine fiber layer 43 discharging the filtrated fluid from the filter medium.

When studying the functioning of various types of filter media it has been surprisingly learned that the best separation efficiency is not reached by decreasing gradually the porosity or the pore size of the filter medium like the prior art suggests for flow-through filters, but by manipulating the velocity of the fluid flow between the front and back surfaces of the filter medium. The porosity or the pore size correlates with fiber diameter such that the smaller the fiber diameter is in a layer, the smaller is the pore size and the porosity of the layer. Thereby the porosity of a layer, when producing each layer of several different types and sizes of fibers, is intermediate to the porosities of layers produced of individual fiber types. The porosity or, in this case, the porosity comparisons may be performed by determining the Textest porosity of a sample sheet of each layer.

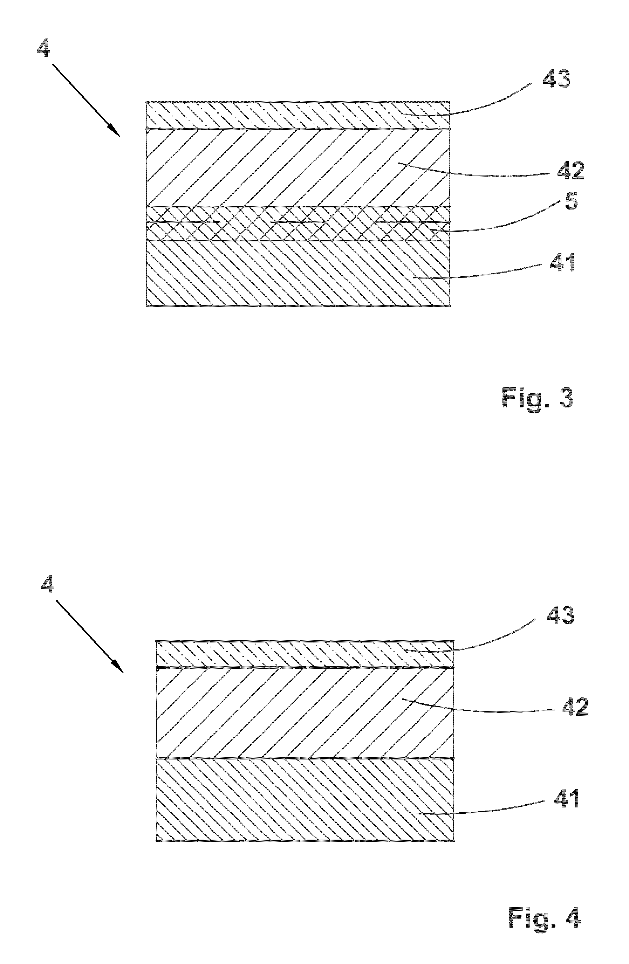

In accordance with Figures 3 and 4 the filter medium in accordance with a first and a second preferred embodiment of the present invention comprises a layered structure as already shown schematically in Figure 2. The layered structure is formed of a pre-filter layer 41 and a fine fiber layer 43, i.e. the final fine particle filtering layer, and an intermediate layer 42 there between. The structure may also be considered to be formed of a substrate, i.e. layers 41 and 42, and a filtering layer, i.e. a fine fiber layer 43. The pre-filter layer is formed of one or more types of fibers, each having a diameter and a maximum fiber length resulting in the layer 41 having a porosity P₄₁. The intermediate layer is formed of one or more types of fibers having a diameter and a maximum fiber length resulting in the layer 42 having a porosity P₄₂. And the fine fiber layer is formed of one or more types of fibers having a diameter and a maximum fiber length resulting in the layer 43 having a porosity P₄₃. A characterizing feature of the filter medium of the present invention is that the porosity P₄₂ of the intermediate layer 42 is larger than that of the layers 41 and 43, in other words, the fibers in each layer have been chosen such that the porosity P₄₂ of the intermediate layer 42 is larger than that of the layers 41 and 43.

It was learned when studying in detail the operation of various filter media by subjecting the filter media to a steady flow of contaminated fluid that the flow-through filter medium works as will be discussed in a somewhat simplified manner in the following. Firstly, it has been understood that as a certain more or less constant (depends on the use of the filter) volume flow should penetrate the filter medium, the velocity of the fluid flow within the filter medium increases compared to the flow velocity before and after the filter medium. Such is naturally due to a smaller cross sectional flow area available within the filter medium. This means, in practice, with traditional layered filter structures where the porosity (and also the cross sectional flow area) of the layers reduces gradually from the upstream surface to the downstream surface that the face velocity of the particles in the flow increases steadily from the front surface to the back surface of the filter medium such that the face velocity of the smallest particles that have not yet been trapped by the filter pores is at its highest when entering the finest filter layer at the back surface of the filter medium. For the same reason also the kinetic energy and the linear momentum of the particle is at its highest at the finest filter layer at the downstream surface. Now, due to the high velocity, or linear momentum the fine particles can very easily pass through the finest filter layer and thus exit the filter.

The above problem is solved by arranging in the filter medium 4 a pre-filter layer 41 having a porosity P₄₁, and an intermediate layer 42 having a higher porosity P₄₂, i.e. larger pores, than layer 41. The inventive filter medium functions such that when a particle enters the filter medium along with the fluid flow, which is constant, and when the particle finds a narrow pore, its face velocity increases. Thereafter, i.e. when the same flow enters the intermediate layer having larger pores, the face velocity of the particle is reduced. Thus the purpose of the intermediate layer is to reduce both the transverse flow velocity of the fluid and the face velocity of the solid particles therewith and also their linear momentum. As the linear momentum is reduced the force of the particles hitting the fine fiber layer 43 is reduced whereby a higher amount of particles are trapped by the fine fiber layer 43, and the fluid passed through the fine fiber layer 43 is filtered more efficiently. Another result of the decelerating the face velocity within the intermediate layer 42 is that for some particles, their linear momentum is decreased to the extent they lose all their momentum and remain/become trapped in this intermediate layer 42. Therefore layer 42, and layers having a corresponding function between two layers each having a smaller porosity, are called from now on decelerating layers. The higher porosity or more open pore structure of the intermediate layer 42 may also provide the remaining fine particles with more pathways to the fine fiber layer 43, such that the particles are not "funneled" to small regions of the fine fiber layer 43 but are distributed over a larger region. Thus the fine fiber layer is able to collect the impurity particles more evenly over the entire internal surface thereof resulting in slower overall pressure drop.

The filter medium of the embodiments of Figures 3 and 4 have a number of variations in their structure. One variation is that the layers 41 and 42 may be partially blended at their borderline area, as shown by layer 5 in Figure 3. Since the layers 41 and 42 are made of one or more types of fibers having different properties (fiber diameter, fiber length and porosity) the blended layer 5 is a mixture of the two layers and has a porosity P₅ between porosities P₄₁ and P₄₂. Thereby the pre-filter layer (here both layers 41 and 5 are included) has a gradient structure where the flow properties of the layers gradually change from the porosity of the pre-filter layer to the porosity of the decelerating layer. Another variation is that the pre-filter layer 41 and the decelerating layer 42 may be laid one on top of another such that there is a clear borderline between the layers as shown in Figure 4. Now that the layers 41 and 42 in Figure 4 are, in a way separate and not partially blended with each other in the manufacturing stage their bonding has to be performed by some other appropriate means. A preferred alternative is the use of bicomponent fibers in the manufacture of at least one of layer 41 and layer 42. A preferred option is to include bicomponent fibers in the furnish of pre-filter layer 41, and provide by means of wet- or dry-laying the decelerating layer 42 of synthetic PET-CoPET fibers on layer 41. When heating the composite in an oven the bicomponent fibers melt partially and bond the two layers together. Thereafter the fine fiber layer 43 may be laid on top of the decelerating layer 42, or the substrate, if the composite of layers 41 and 42 is called such. A further option is to bond the fine fiber layer to the decelerating layer 42 by providing layer 42 with a sufficient amount of bicomponent fibers for bonding both layers 41 and 43 to layer 42.

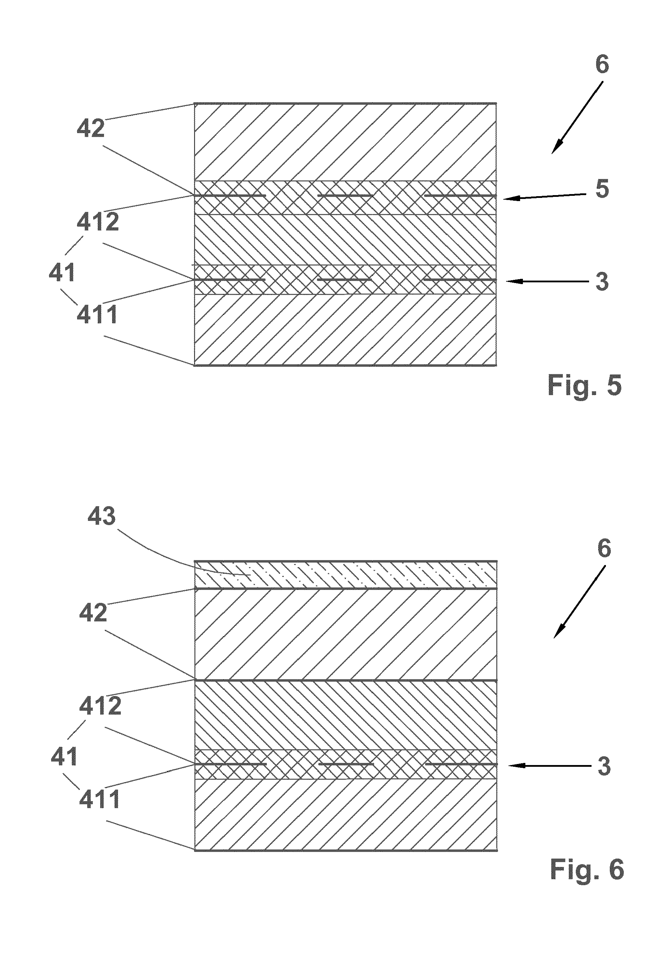

In accordance with the further preferred embodiments of the present invention discussed in detail in Figures 6 to 14 the filter medium is considered to be formed of a substrate and a fine fiber layer on top of the substrate. The substrate utilized in the rest of the embodiments, which may be considered as the most preferred embodiments, is discussed in more detail in connection with Figure 5. The substrate 6 comprises, in the manner of Figure 3, a pre-filter layer 41 and a decelerating layer 42. However, here the pre-filter layer 41 is formed of two different layers, i.e. a first pre-filter layer 411 and a second pre-filter layer 412. The substrate is preferably produced by laying the decelerating layer on a forming surface, the second pre-filter layer on the decelerating layer and a first pre-filter layer on the second pre-filter layer. In the later discussed preferred embodiments, the fine fiber layer is deposited on the (first laid) decelerating layer after the substrate has been removed from the forming surface.

The first layer 411 of the substrate 6, or the pre-filter layer 41 comprises one or more types of first pre-filter fibers each having a diameter and a maximum fiber length resulting in the layer 411 having a porosity P₄₁₁. The second layer 412 comprises one or more types of second pre-filter fibers each having a diameter and a maximum fiber length resulting in the second pre-filter layer 412 having a porosity P₄₁₂. Likewise, the decelerating layer 42 comprises one or more types of fibers each having a diameter and a maximum fiber length resulting in the decelerating layer 42 having a porosity P₄₂.

In a most preferred embodiment, the decelerating layer 42, and the first pre-filter layer 411 if the pre-filter 41 has two layers, has at least 80 wt %, more preferably 100 wt%, fibers having a diameter of 7 µm or greater.

In a preferred embodiment, the pre-filter layer 41 (in case the filter medium or substrate has only one pre-filter layer) or the second pre-filter layer 412 (if the filter medium or substrate has two pre-filter layers) comprises at least 50 wt%, preferably at least 60 wt%, of fibers having a diameter or 4 µm or more.

In a further preferred embodiment, the second pre-filter fibers are those having the smallest diameter of all fibers in the second layer 412. Thereby also the porosity P₄₁₂ of the second pre-filter layer 412 is smaller than the porosity P₄₁₁ of the first pre-filter layer 411. In a preferred embodiment the second pre-filter layer 412 contains at least 10 wt. %, most preferably at least 30 wt. % of these second pre-filter fibers having the diameter of less than 3 µm, preferably 1 µm or less.

In the embodiment of Figure 5 there is, between the first pre-filter layer 411 and the second pre-filter layer 412, a boundary area 3 (herein after also referred to as first boundary area). This boundary area 3, which is the area of contact between the first pre-filter layer and the second pre-filter layer, comprises a mixture of the first pre-filter and the second pre-filter fibers and, thus, forms a blended area resulting in the boundary area having a porosity P₃ between the porosities of the layers 411 and 412. If at least one of the first pre-filter and the second pre-filter fibers comprises two or more types of fibers, then this blended area preferably comprises all components of the first pre-filter and the second pre-filter fibers.

Likewise, in the embodiment of Figure 5, there is a boundary area 5 between the second pre-filter layer 412 and the decelerating layer 42 which area 5 comprises a mixture of the second pre-filter fibers and the fibers forming the decelerating layer resulting in the boundary area 5 having a porosity P₅ between the porosities of the layers 412 and 42. Accordingly, this boundary area (herein after also referred to as second boundary area 5) which is the area of contact between the second pre-filter layer 412 and the decelerating layer 42, forms a blended area of the one or more types of fibers forming the second pre-filter layer and the fibers forming the decelerating layer. The blended area preferably comprises all components that form the second pre-filter layer and the decelerating layer. The second boundary area 5 may have a smaller or larger thickness than the first boundary area 3 depending, for instance, on the order the slurries forming the layers are laid on one another. If, for example, the second boundary area 5 results from first providing the slurry for forming the decelerating layer 42 onto the dewatering screen followed by supplying the second slurry onto the decelerating layer as described with regard to the process within this invention, the boundary area 5 has a smaller thickness than the boundary area 3.

However, it has to be mentioned already at this stage that the existence of one or more boundary areas formed of a mixture of fibers from the adjacent layers is by no means necessary for the operation of the present invention, but is a feature or result of the manufacture of the substrate or a stack of layers. Generally speaking, the bonding of adjacent layers may be performed by means of, for instance, bicomponent fibers included in the furnish of one or more layers, or by separately applying an appropriate adhesive between the layers. Thus, in each embodiment of the present invention one or more of the illustrated and discussed blended areas may be left out, as the way of manufacture (for instance dry-laying) does not allow the furnishes to be blended, but leaves the layers separate, whereby the layers have to be bonded by some other appropriate means, which, on the one hand, do not form a blended area between the layers and, on the other hand, do not, in practice, affect the porosity of the layers.

The weight percent of fibers having diameters of 6 µm or greater in the decelerating layer and/or the first pre-filter layer 411 is higher than the weight percent of said fibers in the second pre-filter layer 412. It is believed that this arrangement of fibers results in a substrate wherein the decelerating layer 42 and the first pre-filter layer 411 have a structure of higher porosity/openness than the second pre-filter layer 412, which is located in between the decelerating layer 42 and the first pre-filter layer 411.

In a preferred embodiment, the diameters of the fibers in the decelerating layer 42 are from 6 - 45 µm, preferably of from 7 - 38 µm, and most preferably of from 7 - 17 µm.

In a preferred embodiment, the diameters of the fibers in the first pre-filter layer 411 are from 3.5 - 45 µm, preferably of from 7 - 38 µm, and most preferably of from 3.9 - 18 µm.

In a further embodiment, the maximum fiber length of the fibers in the decelerating layer 42 and the first pre-filter layer 411 independently from each other is up to 75 mm, preferably up to 24 mm, and most preferably up to 12 mm.

Fiber diameters and fiber lengths may be determined by way of scanning electron microscopy (SEM) using a Phenom scanning electron microscope (available from FEI) integrated with Fibermetric software (Phenom World, The Netherlands).

The fibers in the decelerating layer 42 and the first pre-filter layer 411 are independently from each other selected from at least one of the group consisting of natural fibers, polymeric fibers and inorganic fibers. Preferably, the fibers in the decelerating layer 42 and the first pre-filter layer 411 are independently from each other selected from at least one of the group consisting of polymeric fibers and inorganic fibers.

Examples of natural fibers include fibers or derivatives of natural fibers such as cellulose, lyocell, viscose or any other derivatives of cellulosic fibers.

Polymeric fibers in the context of the present invention include polyester, polyethylene, polyethylene terephthalate, polybutylene terephthalate, polyamide, poly propylene, acrylic, bicomponent fibers of PET-CoPET, PE-PET, and the like. In a preferred embodiment, the polymeric fibers are selected from the group consisting of polyethylene, polyethylene terephthalate, polypropylene, polybutylene terephthalate and polyamide.

If the fibers in the decelerating layer 42 and/or the first pre-filter layer 411 are selected from inorganic fibers or include such fibers, then the inorganic fibers are preferably glass fiber strands, micro glass fibers, basalt fibers or aluminum fibers. Synthetic fibers as used herewithin are any fibers that are man-made and include polymeric, cellulosic and inorganic fibers.

In a further embodiment, the invention relates to a filter medium wherein the first pre-filter fibers in the first pre-filter layer 411 and the fibers in the decelerating layer 42 independently from each other are present in an amount of at least 50 weight%, preferably at least 65 weight% based on the total fiber weight of the first pre-filter layer 411 and the decelerating layer 42, respectively. In a preferred embodiment, the amount of the first pre-filter fibers and the fibers forming the decelerating layer in the first pre-filter layer 411 and the decelerating layer 42, respectively, is at least 50 weight%, preferably at least 80 weight%.

The substrate 6 of the filter medium comprises a second pre-filter layer 412 comprising one or more types of second pre-filter fibers. These fibers have a range of diameter and a maximum fiber length. In a preferred embodiment, their range in diameter is of from 0.4 - 5 µm, preferably of from 0.6 - 2.6 µm; and/or wherein their maximum fiber length is 18 mm, preferably 10 mm, more preferably 3 mm. The second pre-filter fibers are preferably selected from the group consisting of synthetic fibers and microglass fibers. Examples of synthetic fibers include polyester, polyethylene terephthalate, polybutylene terephthalate, polyamide, polypropylene, acrylic, bicomponent fibers of PET-CoPET, PE-PET, and the like. Preferred examples of synthetic fibers are polyester, polyethylene, polyethylene terephthalate, polybutylene terephthalate, bicomponent fibers of PET-CoPET, PE-PET, and the like. Examples of microglass fibers are B glass, C glass, either air attenuated or flame attenuated. Preferred examples of microglass (MG) fibers include borosilicate chopped glass fibers having a diameter of 0.6 and 1.0 micron (LFI, Germany).

In a preferred embodiment, the second pre-filter fibers in the second pre-filter layer 412 are present in an amount of at least 10 weight%, preferably at least 20 weight%, most preferably at least 30% based on the total weight of the second pre-filter layer 412.

As described herein above, the weight percent of the fibers forming the first pre-filter layer and/or the fibers forming the decelerating layer both having a diameter of 6 µm or greater is higher than the weight percent of the fibers forming the second pre-filter layer and having a diameter of 6 µm or greater.

Without wishing to be bound by theory, it is believed that this specific selection gives an arrangement of fibers wherein the second pre-filter layer 412 of the substrate 6 comprises the smallest fibers within the substrate 6, i.e. excluding the fine fiber layer. It is believed that this arrangement translates into a structure wherein the pores between the fibers in the second pre-filter layer 412 are particularly small, whereas the first pre-filter layer 411 and the decelerating layer 42 have a higher porosity or openness P₄₁₁ and P₄₂ than the second pre-filter layer 412 respectively. Given that the weight percent of fibers having a diameter of 6 µm or greater is higher in the first pre-filter layer and in the decelerating layer than in the second pre-filter layer, this profile can be described as having a converging and diverging pore size. While it is undesirable to have small diameter fibers in the first pre-filter layer 411 and in the decelerating layer 42, (small) amounts that do not interfere with the variable pore structure of the media are considered within the scope of this invention. It is believed that such a variable pore size is of particular value for filtering particulates with lower pressure drops and thus energy savings in HVAC applications and other filtering applications.

In a preferred embodiment of the invention, the ratio of the diameters of the fibers in the first pre-filter layer 411 and the diameters of the second pre-filter layer 412 (D₄₁₁ / D₄₁₂) and the ratio of the diameters of the fibers forming the decelerating layer 42 and the second pre-filter layer 412 (D₄₂ / D₄₁₂) are each independently from each other of from 1.2 to 115, preferably of from 1.4 to 43.

In a further embodiment of the invention, at least one of the first pre-filter layer 411, the second pre-filter layer 412 and the decelerating layer 42 contains a further sort of fibers in addition to the their respective fibers discussed this far. This further sort of fibers can be understood as an additional structural type of fibers. That is, the first pre-filter layer 411, the second pre-filter layer 412 and the decelerating layer 42 may contain other fibers than those already discussed.

Preferably, this additional sort of fibers is selected from binder fibers, preferably bicomponent fibers and glass fiber strands. In a most preferred embodiment, the first pre-filter layer 411, the second pre-filter layer 412 and/or the decelerating layer 42 contains bicomponent fibers and glass fiber strands.

Bicomponent fibers are fibers usually containing more than one polymer. They can have a core and sheath structure, for instance such that the sheath material has a lower melting point than the core one, whereby the bicomponent fibers may be used for bonding fibers or fiber layers together by heating the substrate or the filter medium.

Preferably, further sorts of fibers are contained in the first pre-filter layer 411, the second pre-filter layer 412 and/or the decelerating layer 42 in an amount of from 2 - 70 weight-% based on the total fiber weight of the first pre-filter, the second pre-filter and the decelerating layer, respectively.

In a further preferred embodiment, the first pre-filter layer 411, the second pre-filter layer 412 and the decelerating layer 42 are essentially free from natural fibers such as cellulose. It has been found that filter efficiency and pressure drop characteristics are particularly good during the filtration of gas such as air when the substrate contains no natural fibers that tend to attract moisture or oil or interact with salt from the surroundings. Without wishing to be bound by theory, it is believed that such natural fibers attract water, however cellulosic materials modified for moisture resistance, like for instance viscose, lyocell, cellulose acetate, cellulose nitrate etc., may be considered. Moreover, fibers such as cellulose were found to bind oil and salt. This may lead to a swelling of the fibers and/or clogging of the pores which results in a loss of filter efficiency and also goes along with a significant increase in pressure drop and energy consumption.

In view of the above it has to be understood that the entire above discussion of fiber types and their properties may be applied to the embodiments of Figures 3 and 4 such that the second pre-filter layer 412 of Figure 5 corresponds to the pre-filter layer 41 of Figures 3 and 4 and the decelerating layer 42 of Figure 5 the intermediate layer 42 of Figures 3 and 4. In a similar manner the discussion of the structure and composition of the substrate may be applied to the embodiments discussed in connection with Figures 6 to 14.

The filter medium in accordance with the third preferred embodiment of the present invention comprises, in accordance with Figure 6, a fine fiber layer 43 on top of the substrate 6. In a preferred variation of this embodiment, the fine fiber layer is deposited on top of the decelerating layer 42. The substrate 6 is formed of a two-layered (411 and 412) pre-filter 41, and a decelerating layer 42. Contrary to what is shown in Figure 5 the decelerating layer 42 of the substrate 6 is here dry-laid on the pre-filter layer 412, and the fine fiber layer 43 is applied on top of the decelerating layer 42. Thus, the bonding of the two last mentioned layers to the pre-filter has to be performed with some kind of an adhesive or by means of including bicomponent fibers in the furnish of one of the pre-filter 41 and the decelerating layer 42. In other respects, the composition of the different layers is as discussed above in connection with Figure 5. In another preferred variation of this embodiment the substrate is formed of the pre-filter layers 411 and 412 and the filter medium is produced by laminating a separately produced dry-laid or air-laid decelerating layer 42 on which the fine fiber layer 43 is deposited on the pre-filter layer 412.

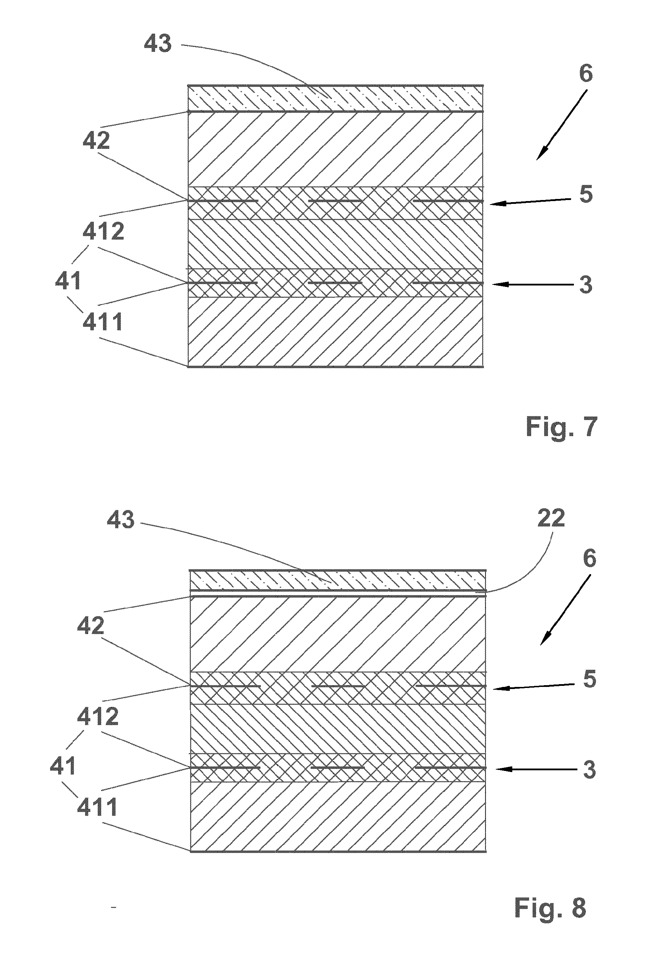

The filter medium in accordance with the fourth preferred embodiment of the present invention comprises, in accordance with Figure 7, a fine fiber layer 43 on top of the substrate 6. In a preferred embodiment, the fine fiber layer is deposited on top of the decelerating layer 42 the composition of which is described herein above when discussing the more detailed structure and composition of the substrate.

In a fifth preferred embodiment, shown in Figure 8, the fine fiber layer 43 adheres to the substrate 6 of the filter medium, preferably to the decelerating layer 42, by means of an adhesive 22. Accordingly, the filter medium preferably comprises an adhesive 22 between the substrate 6, preferably the decelerating layer 42, and the fine fiber layer 43. In both embodiments the fine fiber layer is deposited on the layer that was against the forming surface when manufacturing the substrate.

In another preferred, but not shown, embodiment the fine fiber layer is deposited on top of such a surface or layer that was laid last when manufacturing the substrate. Naturally the fastening of the fine fiber layer may be performed in the same manner as discussed above.

It has to be noted that in any one of the above discussed and following preferred embodiments, the fine fiber layer 43 is deposited by any process that lays fine or sub micronic fibers on the side of the decelerating layer, i.e. the layer that was adjacent or against the formation surface during the formation process. Naturally, another option, applicable in certain cases, is to deposit the fine fiber layer on the layer remote from the forming surface when manufacturing the substrate.

The adhesive 22 may be any adhesive that can be spray-coated, roll coated, rod coated, metered or otherwise applied onto the substrate 6. Preferably, the adhesive is selected from a water-based polymer dispersion or from hot melt adhesive selected from the group consisting of polyurethane and polyacrylic or polyamide and polyester/copolyester polymers based adhesives. In a preferred embodiment, the adhesive 22 is applied to the substrate 6 in a manner such that it does not affect the permeability of the substrate 6. That is, the adhesive preferably is applied with a coat weight of less than 4 g/m².

In a further embodiment, the fine fiber layer 43 is attached to the substrate 6 of the filter media by lamination, hot melt adhesive, ultrasonic bonding or point bonding.

In a still further embodiment, the fine fiber layer 43 is attached to the substrate by means of bicomponent fibers, which are provided, in the production phase of the substrate, in the layer, i.e. the decelerating layer 42, on which the fine fibers are deposited. Now, after the fine fiber layer has been deposited on the substrate 6, the substrate-fine fiber layer is taken into an oven for partially melting the bicomponent fibers such that they bind the fine fiber layer 43 to the decelerating layer 42.

The fine fiber layer 43 comprises fine fibers having a diameter up to 3 µm. In a preferred embodiment, the fine fiber layer 43 comprises sub-micronic fibers. Sub-micronic fibers in the context of the present invention are defined by a fiber diameter of below 1 µm. In a preferred embodiment, the fine fiber layer, therefore, comprises fibers having a fiber diameter of from 0.08 - 0.8 µm, preferably of from 0.1 - 0.4 µm.

In a preferred embodiment, the sub-micronic fibers are polymeric fibers. Preferably, these fibers are selected from the group consisting of polyamide, polyester, polyethylene terephthalate, polypropylene, polycarbonate, polyurethane, polybutylene terephthalate, polystyrene and polyvinylidene fluoride fibers.

In a further embodiment, the fine fiber layer entirely consists of these sub-micronic fibers.

The filter medium of Figure 7, as well as those of the later Figures 8 - 14, is used for filtering solid particles from a fluid flow, i.e. from liquid or gaseous flows by forcing the fluid flow through the filter medium in a direction from the substrate, or its pre-filter layer/s towards the fine fiber layer, i.e. in Figures 3 - 14 from the bottom to the top.

Figure 9 illustrates schematically a filter medium in accordance with a sixth preferred embodiment of the present invention. Here, the filter medium comprises two decelerating layers, whereby a second decelerating layer 422 is arranged between the first decelerating layer 421 of the substrate 6 and the fine fiber layer 43. The purpose of the second decelerating layer 422 is to still further reduce the flow velocity and thus aid the fine fiber layer in its task of trapping fine particles from the fluid flow. The fine fiber layer 43 is basically similar to the fine fiber layer discussed in earlier embodiments. In accordance with a variant of the present invention the second decelerating layer 422 is formed of a dry laid bi-component media (PET-COPET) on which the fine fiber layer 43 is laid by directly spraying the fine fibers and bonding such to the second decelerating layer 422 by heating the composite in an oven. If the dry-laid bicomponent media, i.e. the second decelerating layer 422 is laid on the first decelerating layer 421 of the substrate 6, and the fine fiber layer 43 on the dry laid bicomponent media 422, the entire filter medium may be taken into an oven to be heated such that the bicomponent layer 422 adheres to both the first decelerating layer 421 and the fine fiber layer 43. The diameter of the fibers forming the second decelerating layer 422 is of the order of 10 - 30 µm, preferably 15 - 20 µm. Such fibers result in the second decelerating layer having a porosity of P₄₂₂, which is larger or higher than the porosity P₄₂₁ of the first decelerating layer 421.

Figure 10 illustrates schematically, as a seventh preferred embodiment of the present invention, how, when manufacturing the end product, i.e. the filter medium the fine fiber layer - second decelerating layer composite is laminated, or otherwise attached, on the substrate. The lamination takes place on top of the decelerating layer of the substrate 6, i.e. the first decelerating layer 421 of the substrate 6. Normally, the first decelerating layer 421 is the layer that is, when manufacturing the substrate 6, the first layer laid on the forming surface and on which the other layers are laid. However, in some cases, the decelerating layer 421 may be the layer laid last in the manufacturing stage of the substrate. The above discussed feature is applicable, not only in this embodiment but in all embodiments of the present invention, i.e. from the first embodiment to the tenth one. The adhesive used in the lamination or other fastening of the fine fiber layer - second decelerating layer composite to the substrate is either hot melt, polyurethane-, polyester- or polyamide- based adhesive.

In view of the above it should be understood that the fine fiber layer - second decelerating layer composite may be applied as a filter medium of its own, i.e. without the substrate on which it is laminated in the above embodiment. When the fine fiber layer - second decelerating layer is used as an independent filter medium, its composition may be the one discussed already above, i.e. the layer is formed of a bi-component media (PET-CoPET), the diameter of the fibers forming the layer being of the order of 10 - 30 µm, preferably 15 - 20 µm. However, in accordance with a preferred embodiment the layer on which the fine fiber layer is laid is formed of 15 weight% chopped glass fiber strand having a diameter of 6,5 µm, 2 weight% PET-CoPET fibers of 1,7 dtex (about 13 µm) and a length of 6 mm, 73 weight% fibers of B-glass having a diameter of 3,9 µm and 10 weight% fibers of B-glass having a diameter of 5,6 µm. In broader terms the micro glass layer is a composition of 10 - 30 weight% chopped glass fiber strand having a diameter of 3 - 10 µm, 1 - 5 weight% PET-CoPET fibers having a diameter of 10 - 20 µm, 50 - 85 weight% B-glass fibers having a diameter of 3 - 5 µm, and 5 - 20 weight% B-glass fibers having a diameter of 5 - 10 µm and a length of 3 - 10 mm.

The fine fiber layer of the above discussed independent filter medium comprises fine fibers having a diameter up to 3 µm. In a preferred variation, the fine fiber layer comprises sub-micronic fibers. Sub-micronic fibers in this context are defined by an fiber diameter of below 1 µm. Here, the fine fiber layer, therefore, comprises fibers having a fiber diameter of from 0.08 - 0.8 µm, preferably of from 0.1 - 0.4 µm. The sub-micronic fibers are polymeric fibers. Preferably, these fibers are selected from the group consisting of polyamide, polyester, polyethylene terephthalate, polypropylene, polycarbonate, polyurethane, polybutylene terephthalate, polystyrene and polyvinylidene fluoride fibers. In a further variation, the fine fiber layer entirely consists of these sub-micronic fibers.

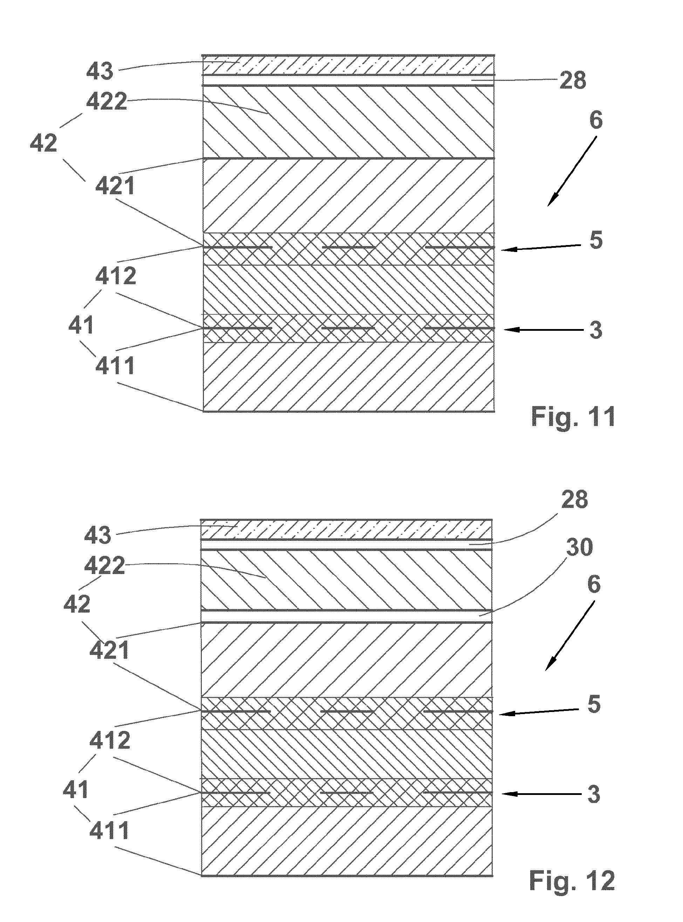

Figure 11 illustrates schematically, as an eighth preferred embodiment of the present invention, how the fine fiber layer 43 is attached on the second decelerating layer 422 by means of, for instance, an adhesive 28. The adhesive 28 may be any adhesive that can be spray-coated, roll coated, rod coated, metered or otherwise applied onto the second decelerating layer 422. Preferably, the adhesive is selected from a water-based polymer dispersion selected from the group consisting of polyurethane and polyacrylic based adhesives. In a preferred embodiment, the adhesive 28 is applied to the second decelerating layer 422 in a manner such that it does not affect the permeability of the filter medium. That is, the adhesive preferably is applied with a coat weight of less than 4 g/m². The fine fiber layer 43 may also be attached to the second decelerating layer 422 of the filter media by lamination, hot melt adhesive, ultrasonic bonding or point bonding.

Figure 12 illustrates schematically, as a ninth preferred embodiment of the present invention, an option how the second decelerating layer 422 may be attached on the substrate 6 by means of, for instance, an adhesive 30. The adhesive 30 may be any adhesive that can be spray-coated, roll coated, rod coated, metered or otherwise applied onto the substrate 6. Preferably, the adhesive is selected from a water-based polymer dispersion selected from the group consisting of polyurethane and polyacrylic based adhesives. In a preferred embodiment, the adhesive 30 is applied to the substrate 6 in a manner such that it does not affect the permeability of the filter medium. That is, the adhesive preferably is applied with a coat weight of less than 4 g/m².

Figure 12 illustrates also, as an tenth preferred embodiment of the present invention, how the second decelerating layer 422, on which the fine fiber layer 43 has been attached by means of an adhesive, may also be attached to the substrate 6 of the filter media by lamination, hot melt adhesive, ultrasonic bonding or point bonding. Now that the bonding between the second decelerating layer 422 and the fine fiber layer 43 is done by adding external adhesive, the second decelerating layer 422 does not necessarily need bicomponent fibers but it may be made of the same kind of fibers as layers 411 and 42 of the substrate 6. However, it is a preferred feature of the present invention that the diameter of fibers in the second decelerating layer 422 is larger than in the first decelerating layer 421 of the substrate 6 beneath the second decelerating layer 422.

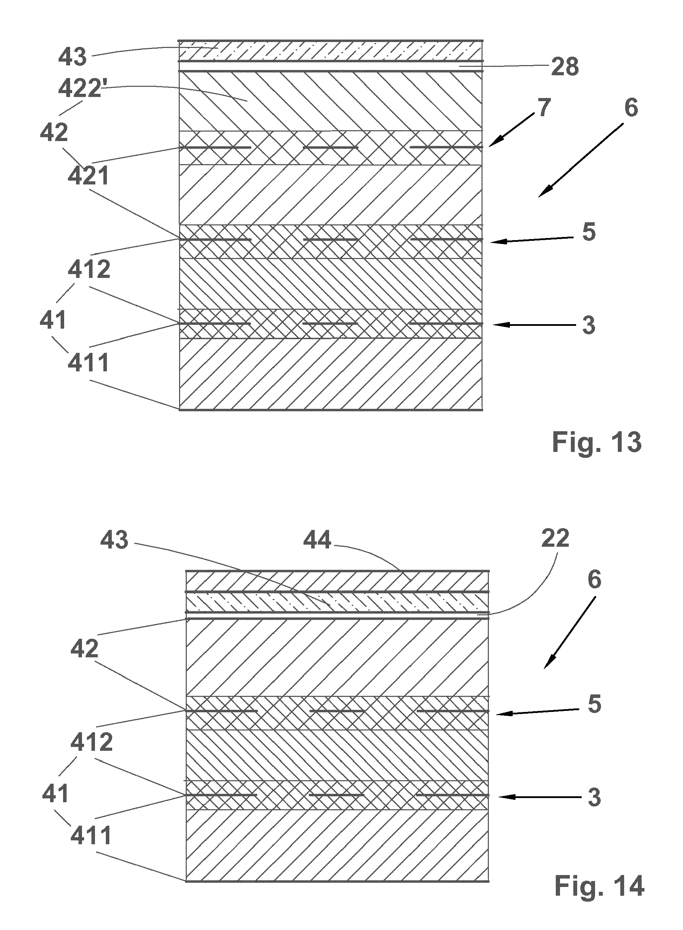

Figure 13 illustrates schematically, as an eleventh preferred embodiment of the present invention, a further way of manufacturing the filter medium. Here, the second decelerating layer 422' is made a part of the substrate 6 by laying four layers 411, 412, 421 and 422' one on top of another when forming the substrate. In the first variation of this embodiment the layer 422' is first laid on a forming surface, and then the layers 421, 412 and 411 thereon in the said order. In a second variation the layers are laid in an opposite order, i.e. layer 411 first, and then layers 412, 421 and 422'. The most essential feature of the setting of the layers of the filter medium of Figure 13 is that there are at least two different flow phases, between the layer 412 having the smallest porosity of the layers of the substrate 6 and the fine fiber layer 43 (having the smallest porosity of the entire filter medium), in which the velocity of the flow is manipulated, i.e. reduced in both decelerating layers. Depending on the manufacturing method of the substrate 6 it is possible that there are between the various layers 411, 412, 421 and 422' of the substrate 6 mixed layers 3, 5 and 7, respectively, where the mixed layers are formed of a mixture of the fibers of the adjoining layers and also the properties, like for instance the porosity of the mixed layers, is somewhere between the porosities of the adjoining layers. The fastening of the fine fiber layer 43 to the second decelerating layer 422' may be performed by any means discussed already above.

In a further twelfth embodiment of the present invention shown in Figure 14, the filter medium comprises a protective layer 44 on top of the fine fiber layer 43. That is, the fine fiber layer 43 is preferably covered by a protective layer 44. The protective layer 44 can be any type of layer that is preferably selected from the group consisting of polyester, polyethylene, polyethylene terephthalate, polybutylene terephthalate, polypropylene, polyamide or any combination of the above fibers and combinations hereof with PE-PET or PET-coPET bicomponent fibers. The protective layer may act not only as the protective layer (protecting the fine fiber layer from outside abrasion) arranged on the outer surface of the filter medium, but it may also function as a reinforcing layer for the entire filter medium or as a support layer on which the fine fiber layer is laid prior to fastening to the support.

The protective layer 44 may be attached, though not illustrated in Figure 14, on the fine fiber layer 43 by means of, for instance, an adhesive 22. The adhesive may be any adhesive that can be spray-coated, roll coated, rod coated, metered or otherwise applied onto the protective layer or the fine fiber layer. Preferably, the adhesive is a hotmelt adhesive or selected from a water-based polymer dispersion selected from the group consisting of polyurethane and polyacrylic based adhesives. In a preferred embodiment, the adhesive is applied to the protective layer or the fine fiber layer in a manner such that it does not affect the permeability of the filter medium. That is, the adhesive preferably is applied with a coat weight of less than 4 g/m². The layers may also be attached to one another by lamination, hot melt adhesive, ultrasonic bonding or point bonding.

It has been found that the filter medium described herein, i.e. a filter medium without a protective layer, has excellent mechanical properties. In particular, the present medium shows a very high bending stiffness of at least 500 mg as obtained from its bending resistance according to TAPPI Standard T 543 (Gurley-type tester). The medium can also be pleated and can maintain its shape without significant deformation during use. Moreover, the medium withstands back-pulsed applications wherein the flow of the fluid (i.e. a liquid or a gas) is reversed to effectively clean the medium. In back-pulsed jet applications, the fine fiber layer is on the upstream side of the media. The medium also has a high pore volume within the substrate which allows for high permeability values. The air permeability of the inventive filter media is always higher than the corresponding microglass media on the market with comparable efficiency level. For example for an inventive media in the rank of H10, the permeability is in the range of 230 - 260 l/m²/s measured with Textest porosimeter at a pressure of 200 Pa; corresponding glass media with same H10 efficiency is ranked in permeability level of 120 - 140 l/m²/s. This kind of higher permeability level at any given efficiency level results in a better ratio of efficiency/pressure drop for any inventive media at any efficiency level. Surprisingly, the medium shows a reduced pressure drop over time as compared to prior art filter media that have similar mechanical properties and particle removal characteristics.

### Examples

### Example 1

One embodiment of this invention is a filter media comprising a first pre-filter layer 411 of 80% PET fiber having a diameter of 7µm, 10% PET fiber having a diameter of 13 µm and 10% PET/Co-PET bicomponent fiber having a diameter of 17 µm. A second pre-filter layer (412) comprising 8% microglass having a diameter on 0.6 µm, 24% microglass having a diameter of 1 µm, 12% PET fiber having a diameter of 13 µm, 33% PET fiber having a diameter of 7 µm and 23% PET/PE bicomponent fiber having a diameter of 17 µm. A decelerating layer 42 comprising 80% PET fiber having a diameter of 7µm, 10% PET fiber having a diameter of 13 µm and 10% PET/Co-PET bicomponent fiber having a diameter of 17 µm. The fine fiber layer (43) comprises PA or PVDF nanofibers having a diameter of .08-0.8 µm, preferably 0.1-.4 µm.

### Example 2

A second embodiment of this invention is a filter media comprising a first pre-filter layer 411 of 10% PET fiber having a diameter of 13 µm, 10% PET/CoPET bicomponent fiber having a diameter of 17 µm and 80% PET fiber having a diameter of 7 µm. The second pre-filter layer 412 comprises 8% microglass having a diameter of 0.6 µm, 23% microglass having a diameter of 1.0 µm, 3% PET fiber having a diameter of 13 µm, 62% chopped glass strand having a diameter of 10 µm and 3.4% PET/CoPET bicomponent fiber having a diameter of 17 µm. The first decelerating layer 421 comprises 10% PET fiber having a diameter of 13 µm, 10% PET/CoPET bicomponent fiber having a diameter of 17 µm and 80% PET fiber having a diameter of 7 µm. The second decelerating layer 422 comprises PET/CoPET fibers of diameter 10-30 µm. The fine fiber layer 43 comprises PA or PVDF nanofibers having a diameter of .08-0.8 µm, preferably 0.1-.4 µm.

### Example 3

A third embodiment of this invention is a filter media comprising pre-filter layer 41 of 50% microglass fibers having a diameter of 3.9 µm, 25% chopped glass strand having a diameter of 6.5 µm, 22% synthetic fibers having a diameter of 13 µm and 3% bicomponent fibers having a diameter of 18 µm. The decelerating layer 42 comprises PET/coPET fibers having a diameter of 10-30 µm. The fine fiber layer 43 comprises PA or PVDF nanofibers having a diameter of .08-0.8 µm, preferably 0.1-.4 µm.

### Example 4

A fourth embodiment of this invention is a filter media comprising a first pre-filter layer 411 of 50% of microglass fibers having a diameter of 3.9 µm, 25% chopped glass strand having a diameter of 6.5 µm, 22% synthetic fibers having a diameter of 13 µm, and 3% bicomponent fibers having a diameter of 18 µm. The second pre-filter layer 412 comprises 82% microglass fibers having a diameter of 2.6 µm, 10% chopped glass fibers having a diameter of 6.5 µm, 3% synthetic fibers having a diameter of 13 µm and 5% microglass fibers having a diameter of 0.8 µm. The decelerating layer 42 comprises PET/coPET fibers having a diameter of 10-30 µm. The fine fiber layer 43 comprises PA or PVDF nanofibers having a diameter of .08-0.8 µm, preferably 0.1-.4 µm.

A preferred process for the preparation of the filter medium discussed in connection with Figure 7 preferably comprises the steps of
- providing first, second and third homogeneous slurries;
- supplying the first slurry onto a dewatering screen to form a first deposit;
- supplying the second slurry onto the first deposit to form a second deposit on top of the first deposit;
- supplying the third slurry onto the second deposit to form a third deposit on top of the second deposit;
- removing the water from the deposits to form a wet fibrous mat or sheet;
- drying the wet fibrous mat or sheet while heating to form a substrate; and
- applying a fine fiber layer on top of the substrate;
   wherein
- the first slurry comprises water and the first fibers described herein above having at least 80% synthetic staple fiber having a range of diameter of 6 - 45 µm;
- the second slurry comprises water and the second fibers described herein above having at least 10 % micro fibers having a range of diameter of 0.4 - 5 µm; and
- the third slurry comprises water and the third fibers described herein above having at least 80% synthetic staple fiber having a range of diameter of 6 - 45 µm.

In this process, first, second and third homogenous slurries are provided. These slurries can be provided by any method known in the art such as by adding and mixing the fibers in water.

As used herein, the first homogeneous slurry comprises water and the first fibers preferably having at least 80% synthetic staple fiber having a range of diameter of 6 - 45 µm. Likewise, the second slurry comprises water as well as the second fibers preferably having at least 10 % micro fibers having a range of diameter of 0.4 - 5µm. Moreover, the third slurry comprises water and the third fibers preferably having at least 80% synthetic staple fiber having a range of diameter of 6 - 45 µm.

Once the first, the second, and the third homogeneous slurries are prepared, they are applied onto a dewatering screen. This screen can be any screen commonly used in a paper making process. Preferably, this screen is a dewatering endless screen. Upon supplying the first slurry onto the dewatering screen, a first deposit is formed on the screen. Subsequently, the second slurry is supplied onto the first deposit to form a second deposit on top thereof. Then, the third slurry is supplied onto the second deposit to form a third deposit on top of the second deposit. Supplying the first, the second and the third slurries can be carried out by using different channels of a headbox of a wetlaid forming machine. Alternatively, the slurries can be applied one after the other using a dynamic handsheet former from Techpap SAS (Grenoble, France).

During or after deposition of the individual slurries, water is removed to form a wet fibrous mat or sheet. Subsequently, the wet fibrous mat or sheet is dried while heating to form the substrate. This substrate - as defined herein above - comprises the first, the second, and the third layer comprising the individual fibers.

It is believed that applying the first, the second, and the third slurries on top of each other results in a boundary area between adjacent layers, which forms a blended area comprising first and second or third and second fibers.

Staple fibers as used herein are short cut fibers that are not longer than 75 mm.

Micro fibers as used herein are fibers having a diameter in the range of 0.4 - 5 µm and a maximum length of 75 mm, preferably 18 mm, more preferably 10 mm, most preferably 3 mm.

Within the boundary area, the components of the first and second and the components of the third and second layers intermingle with each other such that there is a fibrous interlock rather than a sharp and defined edge, which would separate the individual layers from each other.

Without wishing to be bound by theory, the inventors believe that this boundary area results in a smooth or semi continuous gradient wherein the diameter of the fibers that are contained in the substrate decreases from the outer layers to the mid-layer of the substrate. It is believed that this fiber arrangement results in a converging-diverging pore size distribution which may be regarded as converging and diverging pore size across the thickness of the filter medium. This arrangement was found to be particularly valuable in filtering applications.

In addition to what has been claimed the present invention is encompassed by a number of variations, which are listed in the following

In accordance with a first further variation of the present invention the method step f) of claim 1 is practiced by allowing the flow velocity of the fluid to decelerate in at least two layers 421, 422, 422' between two other layers 41, 43 of the filter medium 4.

In accordance with a second further variation of the present invention the method of claim 1 is practiced by providing the filter medium with layers having at least three porosities, and by providing two layers 41; 412; 43 with lower porosities than the layer 42; 421; 422 therebetween.

In accordance with a third further variation of the present invention the at least one pre-filter layer 41 and the at least one decelerating layer 42 of the filter medium form a substrate (6) on top of which the fine fiber layer (43) is arranged.

In accordance with a fourth further variation of the present invention the second decelerating layer 422 of the filter medium is formed of fibers having a diameter and a maximum fiber length to give the layer 422 a porosity P₄₂₂, the porosity P₄₂₂ being larger than the porosity P₄₂₁ of the first decelerating layer 421.

In accordance with a fifth further variation of the present invention the second decelerating layer 422 of the filter medium is formed of dry laid bi-component (PET-CoPET) fibers having a diameter larger than that in the first decelerating layer 421 of the substrate 6.

In accordance with a sixth further variation of the present invention the at least one pre-filter layer 41 and the first decelerating layer 421 of the filter medium form a substrate 6 on top of which the fine fiber layer 43 is arranged together with the second decelerating layer 422.

In accordance with a seventh further variation of the present invention the at least one pre-filter layer 41 of the filter medium comprises at least a first pre-filter layer 411 formed of fibers having a diameter and a maximum fiber length to give the layer 411 a porosity P₄₁₁, and a second pre-filter layer 412 formed of fibers having a diameter and a maximum fiber length to give the layer 412 a porosity P₄₁₂, the porosity P₄₁₁ being larger than the porosity P₄₁₂.

In accordance with an eighth further variation of the present invention the fine fiber layer 43 of the filter medium is deposited on top of the first or second decelerating layer 421,422.

It is believed that unlike conventional media with a decreasing pore size gradient, this unique media structure allows for the early capture of large particles in the upstream region of the filter media, smaller particles being trapped in the region of low porosity, followed by a decrease in the face velocity of remaining particles as they enter the diverging region. This reduction in face velocity and increasing pore structure allows for a better distribution of the remaining particles across the fine fiber layer as the fluid exits the filter, thus having a lower impact on the pressure drop. Accordingly, the filter medium of the present invention is preferably used in a way such that the fluid to be filtered exits the filter medium at the side of the substrate upon which the fine fiber layer is allocated.

## Claims

1. A method of filtering a fluid, the method comprising the steps of:
a. arranging a conduit (2) for a fluid to flow,
b. providing a filter medium (4) with at least three layers (41, 42, 43), each having a porosity,
c. providing the conduit (2) with the filter medium (4),
d. arranging the fluid to flow along the conduit (2) in a flow direction (F) and at a flow velocity, the flow direction being transverse to the filter medium (4),
e. separating solid particles from the fluid by retaining such in or on the filter medium (4) and allowing filtered fluid to flow through the filter medium (4),
**characterized by**
f. manipulating the flow velocity of the fluid within the filter medium (4) by allowing the flow velocity to decelerate in at least one layer (42) between two other layers (41, 43) of the filter medium (4).

2. The method as recited in claim 1, **characterized by**, in step f, allowing the flow velocity of the fluid to accelerate in at least one layer (41; 411, 412) prior to allowing the flow velocity to decelerate.

3. A filter medium for filtering a fluid, the filter medium (4) comprising at least three layers (41, 42, 43) in the flow direction (F) of the fluid,
○ at least one fibrous pre-filter layer (41; 411, 412) having a porosity (P₄₁; P₄₁₁, P₄₁₂);
○ at least one fibrous intermediate layer (42; 421, 422) having a porosity (P₄₂: P₄₂₁,P₄₂₂); and
○ a fine fiber layer (43) having a porosity (P₄₃);
**characterized in that**
○ the at least one fibrous intermediate layer is a decelerating layer (42; 421, 422), and
○ the porosity (P₄₂; P₄₂₁, P₄₂₂) of the at least one decelerating layer (42; 421, 422) positioned between the at least one pre-filter layer (41; 411, 412) and the fine fiber layer (43) is larger than the porosities (P₄₁; P₄₁₁, P₄₁₂) and (P₄₃) of the at least one pre-filter layer (41; 411, 412) and the fine fiber layer (43), respectively.

4. The filter medium as recited in claim 3, **characterized in that** the at least one fibrous pre-filter layer (41) and the at least one fibrous decelerating layer (42) form a substrate (6) on top of which the fine fiber layer (43) is arranged together with a protective layer (44).

5. The filter medium as recited in claim 3 or 4, **characterized in that** the at least one fibrous decelerating layer (42) is formed of at least a first fibrous decelerating layer (421) and a second fibrous decelerating layer (422, 422').

6. The filter medium as recited in claim 5, **characterized in that** fibers forming the second decelerating layer (422) have a range of diameter of the order of 10 - 30 µm, preferably 15 - 20 µm.

7. The filter medium as recited in claim 3 or 4 or 5, **characterized in that** the at least one fibrous pre-filter layer (41) is formed of at least a first pre-filter layer (411) and a second pre-filter layer (412) and a boundary area (3) between the first and the second pre-filter layers (411, 412) forms a first blended area comprising fibers from both the first and the second pre-filter layers (411, 412), or that a boundary area (5) between the pre-filter layer (41, 412) and the decelerating layer (42, 421) forms a second blended area comprising fibers from both the pre-filter layer (41, 412) and the decelerating layer (42, 421) or that a boundary area (7) between the first and the second decelerating layers (421, 422') forms a third blended area comprising fibers from both the first and the second decelerating layers (421, 422, 422').

8. The filter medium as recited in any one of the preceding claims 3 - 7, **characterized in that** the at least one fibrous pre-filter layer (41) is formed of a first pre-filter layer (411) and a second pre-filter layer (412), and the first pre-filter layer (411) is, for the most part thereof, formed of fibers having a diameter ranging between 3 - 45 µm, preferably of from 7 - 38 µm, most preferably of from 7 - 17 µm; and wherein the amount of fibers having a diameter of less than 3 µm within the first pre-filter layer (411) is less than 3 wt.%, preferably less than 1 wt.% and most preferably 0 wt.% based on the total weight of the first pre-filter layer (411) and/or wherein the maximum fiber length of the fibers of the layer (411) is up to 75 mm.

9. The filter medium as recited in any one of the preceding claims 3 - 8, **characterized in that** the decelerating layer (42, 421) is, for the most part thereof, formed of fibers having a diameter ranging between 6 - 45 µm, preferably between 7 - 38 µm, most preferably between 7 - 17 µm; and wherein the amount of fibers having a diameter of less than 5 µm within the decelerating layer (42, 421) is less than 3 wt.%, preferably less than 1 wt.% and most preferably 0 wt.% based on the total weight of the decelerating layer (42, 421) and/or wherein the maximum fiber length of the fibers of the layer (42, 421) is up to 75 mm.

10. The filter medium as recited in any one of the preceding claims 3 - 9, **characterized in that** the at least one fibrous pre-filter layer (41) is formed of a first pre-filter layer (411) and a second pre-filter layer (412) and the second pre-filter layer (412) is formed of fibers having a diameter ranging between 0.4 - 5 µm, preferably between 0.6 - 2.6 µm; and/or wherein the fibers of the second pre-filter layer (412) have a maximum length of 18 mm or less, preferably 10 mm or less, more preferably 3 mm or less.

11. The filter medium as recited in any one of the preceding claims 3 - 10, **characterized in that** the at least one fibrous pre-filter layer (41) is formed of a first pre-filter layer (411) and a second pre-filter layer (412) and the fibers of the first pre-filter layer (411) and the decelerating layer (42, 421) independently from each other are selected from the group consisting of polymeric fibers and inorganic fibers, wherein the polymeric fibers are preferably selected from polyester, polyethylene, polyethylene terephthalate, polyolefin, polybutylene terephthalate and/or polyamide, and wherein the inorganic fibers are preferably microglass or glass fiber strands.

12. The filter medium as recited in any one of the preceding claims 5 - 11, **characterized in that** the at least one fibrous pre-filter layer (41) is formed of a first pre-filter layer (411) and a second pre-filter layer (412) and that the first pre-filter layer (411), the second pre-filter layer (412) and/or the decelerating layer (42, 421) further contains up to 50 wt.%, preferably from 2 - 35 wt.%, more preferably 2 - 25 wt.% of binder fibers based on the total weight of each of the first pre-filter layer (411), the second pre-filter layer (412) and/or the decelerating layer (42, 421).

13. The filter medium as recited in any one of the preceding claims 5 - 12, **characterized in that** the at least one fibrous pre-filter layer (41) is formed of a first pre-filter layer (411) and a second pre-filter layer (412) and that the fibers of the second pre-filter layer (412) are selected from the group consisting of synthetic fibers and microglass fibers.

14. The filter medium as recited in any one of the preceding claims 3 - 13, **characterized in that** the fine fiber layer (43) on top of the substrate (6) comprises fine fibers having a fiber diameter of less than 3 µm or sub-micronic fibers having a fiber diameter of less than 1 µm; preferably of from 0.08 to 0.8 µm, most preferably of from 0.1 to 0.4 µm.

15. The filter medium as recited in claim 14, **characterized in that** the sub-micronic fibers are polymeric fibers that are preferably selected from the group consisting of polyester, polypropylene, polyurethane, polycarbonate, polyamide, polystyrene and polyvinylidene fluoride sub-micronic fibers.

16. The filter medium as recited in any one of the preceding claims 3 - 15, **characterized in that** the fine fiber layer (43) is provided with the lowest porosity of the layers (41, 42, 43) of the filter medium (4).

17. A filter element including the filter medium as recited in any one of claims 3 to 16 and the use of such filter element in one of an HVAC application and in a Gas Turbine application.
